# EUROPEAN PATENT APPLICATION

(11) **EP 3 854 853 A1**
(43) Date of publication of application: **28.07.2021**
(21) Application number: 19862022.1
(22) Date of filing: 20.09.2019
(51) Int. Cl.: C08L 101/00, B60C 5/14, C08L 21/00, C08L 23/26, C08L 67/00

(54) **TIRE INNER LINER AND PNEUMATIC TIRE**

(30) Priority: 21.09.2018 JP 2018177498
(71) Applicant: The Yokohama Rubber Co., Ltd., Tokyo 105-8685 (JP); Mitsubishi Chemical Corporation, Chiyoda-ku Tokyo 100-8251 (JP)
(72) Inventor: SATO, Shun, Hiratsuka-shi, Kanagawa 254-8601 (JP); TOMOI, Shusaku, Hiratsuka-shi, Kanagawa 254-8601 (JP); KOBAYASHI, Yuuta, Tokyo 100-8251 (JP)
(74) Representative: Hoffmann Eitle
(86) International application number: PCT/JP2019/037093
(87) International publication number: WO 2020/059872

(57) **Abstract**

Provided is a tire inner liner with which it is possible to suppress resistance to flex fatigue during tire travel and peeling failures at high temperatures, and also reduce rolling resistance at low temperatures. A tire inner liner comprising a material that contains a thermoplastic elastomer composition, which is constituted from a thermoplastic resin or thermoplastic-resin component and an elastomer component, said tire inner liner characterized in that, in a temperature dependent curve of tanδ of the material, the maximum value of tanδ occurs between 20°C and 70°C inclusive.

## Description

### FIELD

The present invention relates to a tire inner liner and a pneumatic tire. More specifically, the present invention relates to a tire inner liner comprising a material comprising a thermoplastic resin or a thermoplastic elastomer composition, and a pneumatic tire comprising the tire inner liner.

### BACKGROUND

A technique is known where a polymer composition obtained by melt-kneading and dynamically vulcanizing a thermoplastic resin such as polyamide and an elastomer component to thereby allow the elastomer component to form a discontinuous phase is used in a tire inner liner (Japanese Patent No. 3217239).

A technique is known where a thermoplastic resin composition obtained by dispersing modified rubber having an acid anhydride group or an epoxy group, in polyamide and an ethylene-vinyl alcohol copolymer, is used in a tire inner liner (Japanese Patent No. 5909846).

### [CITATION LIST]

### [PATENT LITERATURE]

[PTL 1] Japanese Patent No. 3217239
[PTL 2] Japanese Patent No. 5909846

### SUMMARY

### [TECHNICAL PROBLEM]

An object of the present invention is to provide an inner liner which can allow for an improvement in bending fatigue resistance in tire travelling, suppression of peeling failure at a high temperature, and a reduction in rolling resistance at a low temperature, as compared with an inner liner using polyamide and an ethylene-vinyl alcohol copolymer.

### [SOLUTION TO PROBLEM]

The present inventors have found that an inner liner produced by using a material having a maximum value of tan δ at 20 to 70°C in the temperature-dependent curve of tan δ can allow for an improvement in bending fatigue resistance in tire travelling, suppression of peeling failure at a high temperature, and a reduction in rolling resistance at a low temperature, and thus have completed the present invention.

The present invention relates to a tire inner liner comprising a material comprising a thermoplastic resin or a thermoplastic elastomer composition containing a thermoplastic resin component and an elastomer component, wherein a maximum value of tan δ is present at 20 to 70°C in the temperature-dependent curve of tan δ of the material.

The present invention also relates to a pneumatic tire comprising the tire inner liner.

The present invention includes the following aspects.
[1] A tire inner liner comprising a material comprising a thermoplastic resin or a thermoplastic elastomer composition containing a thermoplastic resin component and an elastomer component, wherein a maximum value of tan δ is present at 20 to 70°C in the temperature-dependent curve of tan δ of the material.
[2] The tire inner liner according to [1], wherein the ratio of tan δ at -30°C to tan δ at 50°C of the material is less than 1.
[3] The tire inner liner according to [1] or [2], wherein the thermoplastic resin or the thermoplastic resin component is a modified ethylene-vinyl alcohol copolymer.
[4] The tire inner liner according to [3], wherein the modified ethylene-vinyl alcohol copolymer is a polyester-modified ethylene-vinyl alcohol copolymer.
[5] The tire inner liner according to any of [1] to [4], wherein the thermoplastic elastomer composition has a continuous phase and a dispersion phase, the thermoplastic resin component forms a continuous phase, and the elastomer component forms a dispersion phase.
[6] The tire inner liner according to any of [1] to [5], wherein the material further comprises a second thermoplastic resin or thermoplastic elastomer having a melting point of 170°C or more.
[7] The tire inner liner according to [6], wherein the second thermoplastic resin or thermoplastic elastomer is a polyester resin or a polyester elastomer.
[8] A pneumatic tire comprising the tire inner liner according to any of [1] to [7].

### [ADVANTAGEOUS EFFECTS OF INVENTION]

A tire produced by using the tire inner liner of the present invention can be improved in bending fatigue resistance in tire travelling, suppressed in peeling failure at a high temperature, and reduced in rolling resistance at a low temperature.

### DESCRIPTION OF EMBODIMENTS

The present invention relates to a tire inner liner comprising a material comprising a thermoplastic resin or a thermoplastic elastomer composition containing a thermoplastic resin component and an elastomer component, wherein a maximum value of tan δ is present at 20 to 70°C in the temperature-dependent curve of tan δ of the material.

The tire inner liner of the present invention comprises a material where a maximum value of tan δ is present at 20 to 70°C in the temperature-dependent curve of tan δ. A tire comprising an inner liner produced from the material where a maximum value of tan δ is present at 20 to 70°C in the temperature-dependent curve of tan δ hardly causes cracking due to bending fatigue to occur because the inner liner is easily increased in temperature in usual travelling and thus is flexible. The tire sufficiently warmed generates relatively low heat, is suppressed in excessive temperature rise, and is suppressed in peeling of the inner liner. In general, it is known that the frequency of deformation with respect to deformation of a viscoelastic body such as rubber can be converted into the temperature (temperature-time superposition principle). Any deformation high in frequency corresponds to a low temperature and any deformation low in frequency corresponds to a high temperature. For example, in the case of deformation of a tread member of a tire, deformation in usual travelling corresponds to a low frequency of several tens Hz corresponding to the rotational speed of such a tire, and corresponds to 50 to 60°C when converted into the temperature. On the other hand, deformation in braking on a wet road corresponds to a high frequency of 10⁴ to 10⁵ Hz, and corresponds to a low temperature around 0°C when converted into the temperature. Such relationships allow a rubber composition commonly used in a tread member to be designed so that a decrease in tan δ at 50 to 60°C corresponding to usual travelling leads to a decrease in rolling resistance coefficient (RRC) and an increase in tan δ at 0°C corresponding to braking on a wet road leads to an enhancement in brake performance (wet skid resistance). However, there has been recently a tendency to treat rolling resistance at a low temperature as important due to the trend of low-fuel consumption, and it is effective for securing wet skid resistance and also reducing rolling resistance coefficient at a low temperature to not only maintain heat generation of a tread at a low temperature, but also decrease heat generation of any member other than the tread. That is, the tire inner liner of the present invention generates low heat at a low temperature, and thus is effective for reducing the rolling resistance coefficient in a temperature region which is difficult to adjust with respect to a tread.

Tan δ is also referred to as "loss tangent", corresponds to the tangent of the phase difference δ (0° ≤ δ ≤ 90°) between vibration stress and vibration strain, and is equal to the ratio between the loss elastic modulus and the storage elastic modulus. Such a difference δ occurs due to viscous properties, and corresponds to the amount relating to the energy loss per cycle.

Tan δ can be determined by a method described in JIS K7198. Specifically, it can be determined from the ratio tan δ = E"/E' where the storage elastic modulus (E') and the loss elastic modulus (E") are determined from the real part and the imaginary part of the complex elastic modulus, respectively, determined by applying to a sample, not only the initial elongation, but also the sine wave dynamic strain as the periodic oscillation by a vibration exciter and here measuring the stress and displacement. Such determination in the present invention is performed at an initial elongation of 5%, a frequency of 20 Hz, and a dynamic strain of 0.1% in an atmosphere temperature range from -80°C to 160°C.

The ratio of tan δ at -30°C to tan δ at 50°C of the material constituting the tire inner liner of the present invention is preferably less than 1.

Such tan δ at 50°C is referred to as "tan δ (50°C)" and such tan δ at -30°C is referred to as "tan δ (-30°C)". That is, the ratio of tan δ at -30°C to tan δ at 50°C can be expressed as tan δ (-30°C)/tan δ (50°C).

Tan δ (-30°C)/tan δ (50°C) is more preferably 0.01 to 0.90, even more preferably 0.02 to 0.85. A too high tan δ (-30°C)/tan δ (50°C) leads to a small effect of reducing rolling resistance coefficient at a low temperature and also a small effect of suppressing any cracking of the inner liner in usual travelling. A too low tan δ (-30°C)/tan δ (50°C) leads to large tan δ in usual travelling and deterioration in rolling resistance coefficient.

The tire inner liner of the present invention comprises a material comprising a thermoplastic resin or a thermoplastic elastomer composition. The thermoplastic elastomer composition contains a thermoplastic resin component and an elastomer component.

The thermoplastic resin is not particularly limited as long as a material can be prepared where a maximum value of tan δ is present at 20 to 70°C in the temperature-dependent curve of tan δ, and is preferably a modified ethylene-vinyl alcohol copolymer.

The modified ethylene-vinyl alcohol copolymer (hereinafter, also referred to as "modified EVOH") refers to a copolymer containing an ethylene unit (-CH₂CH₂-) and a vinyl alcohol unit (-CH₂-CH(OH)-) as main repeating units and containing any repeating unit other than such repeating units. The modified ethylene-vinyl alcohol copolymer is preferably obtained by reacting a compound for modification with an ethylene-vinyl alcohol copolymer (hereinafter, also referred to as "EVOH"). The modified ethylene-vinyl alcohol copolymer is preferably a polyester-modified ethylene-vinyl alcohol copolymer. The polyester-modified ethylene-vinyl alcohol copolymer refers to one obtained by grafting polyester to a hydroxyl group of an ethylene-vinyl alcohol copolymer. The polyester-modified ethylene-vinyl alcohol copolymer is preferably an aliphatic polyester-modified ethylene-vinyl alcohol copolymer. The aliphatic polyester-modified ethylene-vinyl alcohol copolymer refers to one obtained by grafting an aliphatic polyester to a hydroxyl group of an ethylene-vinyl alcohol copolymer.

The ratio (Content of EVOH unit/Content of polyester unit) of the content of an EVOH unit forming a stem of the polyester-modified ethylene-vinyl alcohol copolymer to the content of a polyester unit grafted to the stem is preferably 40/60 to 99/1, more preferably 60/40 to 95/5, even more preferably 80/20 to 90/10 on a weight ratio. A too low content of the EVOH unit tends to result in deterioration in gas barrier performance. The ratio of the content of the EVOH unit to the content of the polyester unit can be controlled by the loading ratio between EVOH and polyester in a grafting reaction.

The method of producing the polyester-modified ethylene-vinyl alcohol copolymer can be any known method of grafting polyester to EVOH forming a stem, and in particular, a method of ring-opening polymerization of a lactone compound in the presence of EVOH is preferably used.

The lactone compound used is not particularly limited as long as it is a lactone compound having 3 to 10 carbon atoms. Such a lactone compound, when has no substituent, is represented by formula (1). Herein, n is an integer of 2 to 9, and preferably n is 4 to 5.

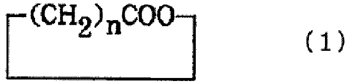

Specific examples can include β-propiolactone, γ-butyrolactone, ε-caprolactone, and δ-valerolactone. ε-Caprolactone and δ-valerolactone are preferable, and ε-caprolactone is more preferable because it is inexpensive and easily available.

Such lactone compounds can be used in combination of two or more thereof.

A conventionally known ring-opening polymerization catalyst is preferably added in a ring-opening polymerization reaction, and examples thereof can include a titanium-based compound and a tin-based compound. Specific examples include titanium alkoxides such as titanium tetra-n-butoxide, titanium tetraisobutoxide, and titanium tetraisopropoxide, tin alkoxides such as dibutyldibutoxytin, and tin ester compounds such as dibutyl tin diacetate. In particular, titanium tetra-n-butoxide is preferable because it is inexpensive and easily available.

Examples of the method of grafting to EVOH by ring-opening polymerization of the lactone compound include a method of melt-kneading both such compounds in a kneading machine, and examples of the kneading machine here include uniaxial and biaxial extruders, a Banbury mixer, a kneader, and a Brabender.

The temperature and time of such melt-kneading are not particularly limited and may be appropriately selected so as to be any temperature where both such substances are molten and any time where grafting is completed, respectively, and are usually 50 to 250°C and 10 seconds to 24 hours, in particular, 150 to 230°C and 5 minutes to 10 hours.

The content of ethylene in EVOH for use as a raw material is, but not limited to, usually 20 to 60% by mol, preferably 25 to 50% by mol, even more preferably 30 to 45% by mol. A too high content of ethylene leads to deterioration in gas barrier performance, and on the contrary, a too low content of ethylene leads to deterioration in ring-opening polymerization reactivity with the lactone compound.

The degree of saponification of EVOH is, but not limited to, usually not less than 80% by mol, preferably 90 to 99.99% by mol, particularly preferably 99 to 99.9% by mol. A too low degree of saponification tends to lead to deterioration in gas barrier performance.

The melt flow rate (MFR) for use as an index of the molecular weight of EVOH is usually 0.1 to 100 g/10 minutes, preferably 0.5 to 50 g/10 minutes, particularly preferably 1 to 25 g/10 minutes in conditions of 210°C and a load of 2160 g. A too low MFR value tends to lead to deterioration in ring-opening polymerization reactivity with the lactone compound.

EVOH here used may be a mixture of two or more of EVOHs different in content of ethylene, degree of saponification, and MFR as long as such a mixture corresponds to a combination of EVOHs where the average value satisfies the above requirement.

The thermoplastic elastomer composition contains a thermoplastic resin component and an elastomer component. The thermoplastic elastomer composition is preferably one which has a phase structure (so-called sea-island structure) consisting of a continuous phase (matrix) and a dispersion phase and in which the thermoplastic resin component forms such a continuous phase and the elastomer component forms such a dispersion phase.

The thermoplastic resin component constituting the thermoplastic elastomer composition is not particularly limited as long as a material can be prepared where a maximum value of tan δ is present at 20 to 70°C in the temperature-dependent curve of tan δ, and examples thereof preferably includes the same examples as the above thermoplastic resin. That is, the thermoplastic resin component is preferably a modified ethylene-vinyl alcohol copolymer, more preferably one obtained by reacting a compound for modification with an ethylene-vinyl alcohol copolymer, even more preferably a polyester-modified ethylene-vinyl alcohol copolymer, even more preferably an aliphatic polyester-modified ethylene-vinyl alcohol copolymer.

The elastomer component constituting the thermoplastic elastomer composition is not particularly limited as long as a material can be prepared where a maximum value of tan δ is present at 20 to 70°C in the temperature-dependent curve of tan δ, and examples thereof can include diene-based rubber and a hydrogenated product thereof, olefin-based rubber, halogen-containing rubber, silicone rubber, sulfur-containing rubber, and fluororubber.

Examples of such diene-based rubber and hydrogenated product thereof include natural rubber (NR), isoprene rubber (IR), epoxidized natural rubber, styrene-butadiene rubber (SBR), butadiene rubber (BR) (high cis BR and low cis BR), acrylonitrile-butadiene rubber (NBR), hydrogenated NBR, and hydrogenated SBR.

Examples of the olefin-based rubber include ethylene-propylene rubber (EPM), ethylene-propylene-diene rubber (EPDM), maleic acid-modified ethylene-propylene rubber (M-EPM), a maleic anhydride-modified ethylene-α-olefin copolymer, an ethylene-glycidyl methacrylate copolymer, a maleic anhydride-modified ethylene-ethyl acrylate copolymer (modified EEA), butyl rubber (IIR), a copolymer of isobutylene and an aromatic vinyl or diene-based monomer, acrylic rubber (ACM), and an ionomer.

Examples of the halogen-containing rubber include halogenated butyl rubber such as brominated butyl rubber (Br-IIR) and chlorinated butyl rubber (Cl-IIR), a halogenated isomonoolefin-p-alkylstyrene copolymer (for example, brominated isobutylene-p-methylstyrene copolymer (BIMS)), halogenated isobutylene-isoprene copolymer rubber, chloroprene rubber (CR), hydrin rubber (CHR), chlorosulfonated polyethylene (CSM), chlorinated polyethylene (CM), and maleic acid-modified chlorinated polyethylene (M-CM).

Examples of the silicone rubber include methyl vinyl silicone rubber, dimethyl silicone rubber, and methyl phenyl vinyl silicone rubber. Examples of the sulfur-containing rubber include polysulfide rubber. Examples of the fluororubber include vinylidene fluoride-based rubber, fluorine-containing vinyl ether-based rubber, tetrafluoroethylene-propylene-based rubber, fluorine-containing silicone-based rubber, and fluorine-containing phosphazene-based rubber.

In particular, a halogenated isomonoolefin-p-alkylstyrene copolymer, a maleic anhydride-modified ethylene-α-olefin copolymer, an ethylene-glycidyl methacrylate copolymer, and a maleic anhydride-modified ethylene-ethyl acrylate copolymer are preferable from the viewpoint of air blocking properties.

Any compounding agent commonly compounded into a rubber composition, such as other reinforcing agent (filler) (for example, carbon black or silica), softener, anti-aging agent, and processing aid, may be compounded into the elastomer component, as long as the effects of the present invention are not impaired.

The thermoplastic elastomer composition can be produced by melt-kneading the thermoplastic resin component and the elastomer component with, for example, a biaxially kneading extruder, and dispersing the elastomer component as a dispersion phase in such a thermoplastic resin component forming a continuous phase. The weight ratio of the thermoplastic resin component to the elastomer component is not limited, and is preferably, but not limited to, 10/90 to 90/10, more preferably 15/85 to 90/10.

The material constituting the tire inner liner preferably further comprises a second thermoplastic resin or thermoplastic elastomer having a melting point of 170°C or more.

Heat resistance can be imparted to the inner liner by incorporating the second thermoplastic resin having a melting point of 170°C or more or the thermoplastic elastomer having a melting point of 170°C or more.

Examples of the second thermoplastic resin include a polyester resin, a polyamide resin, a polyvinyl alcohol resin, a polyvinyl chloride resin, a polyvinylidene chloride resin, a polyetherimide resin, and a polyacetal resin, and the second thermoplastic resin is preferably a polyester resin. Examples of the polyester resin include a polymethylene terephthalate resin, a polyethylene terephthalate resin, a polybutylene terephthalate resin, a polyethylene naphthalate resin, and a polybutylene naphthalate resin, and the polyester resin is preferably a polybutylene terephthalate resin. The polybutylene terephthalate resin (hereinafter, also referred to as "PBT resin") is a polycondensation product of terephthalic acid and 1,4-butanediol. The polybutylene terephthalate resin here used can be any commercially available product. Examples of such any commercially available product of the polybutylene terephthalate resin include NOVADURAN® manufactured by Mitsubishi Engineering-Plastics Corporation, TORAYCON® manufactured by Toray Industries, Inc., and DURANEX® manufactured by WinTech Polymer Ltd.

Examples of the thermoplastic elastomer include a polyester elastomer and a polyamide elastomer, and the thermoplastic elastomer is preferably a polyester elastomer. Examples of the polyester elastomer include a polybutylene terephthalate elastomer. The polybutylene terephthalate elastomer (hereinafter, also referred to as "PBT elastomer") is a thermoplastic elastomer where the hard segment corresponds to polybutylene terephthalate and the soft segment corresponds to aliphatic polyether or aliphatic polyester. The polybutylene terephthalate elastomer here used can be any commercially available product. Examples of such any commercially available product of the polybutylene terephthalate elastomer include PELPRENE® P type and PELPRENE® S type manufactured by Toyobo Co., Ltd., and HYTREL® manufactured by Du Pont-Toray Co., Ltd.

The content of the second thermoplastic resin or thermoplastic elastomer is preferably 0 to 50 parts by weight, more preferably 2 to 45 parts by weight, even more preferably 5 to 40 parts by weight based on 100 parts by weight of the thermoplastic resin or the thermoplastic elastomer composition. A too high content may cause the inner liner not to sufficiently obtain air pressure retainability.

The material constituting the tire inner liner can further contain an acid-modified elastomer. The acid-modified elastomer is contained to thereby impart the advantages of, for example, an enhancement in fatigue durability and an enhancement in followability of adjacent rubber in tire formation. Examples of the acid-modified elastomer include an acid-modified polyolefin-based elastomer and an acid-modified styrene-based elastomer.

Examples of the acid-modified polyolefin-based elastomer include an ethylene-α-olefin copolymer, an ethylene-unsaturated carboxylic acid copolymer, or any derivative thereof, modified by unsaturated carboxylic acid or unsaturated carboxylic anhydride. Examples of the ethylene-α-olefin copolymer modified by unsaturated carboxylic acid or unsaturated carboxylic anhydride include a maleic anhydride graft-modified product of an ethylene-propylene copolymer, a maleic anhydride graft-modified product of an ethylene-butene copolymer, a maleic anhydride graft-modified product of an ethylene-hexene copolymer, and a maleic anhydride graft-modified product of an ethylene-octene copolymer. Examples of the ethylene-unsaturated carboxylic acid copolymer or the derivative thereof modified by unsaturated carboxylic acid or unsaturated carboxylic anhydride include an ethylene-acrylic acid copolymer modified by unsaturated carboxylic acid or unsaturated carboxylic anhydride, an ethylene-methacrylic acid copolymer modified by unsaturated carboxylic acid or unsaturated carboxylic anhydride, an ethylene-methyl acrylate copolymer modified by unsaturated carboxylic acid or unsaturated carboxylic anhydride, and an ethylene-methyl methacrylate copolymer modified by unsaturated carboxylic acid or unsaturated carboxylic anhydride. In particular, a preferable acid-modified polyolefin-based elastomer is any of a maleic anhydride-modified product of an ethylene-propylene copolymer and a maleic anhydride-modified product of an ethylene-butene copolymer. The acid-modified polyolefin-based elastomer here used can be any commercially available product. Examples of such any commercially available product of the acid-modified polyolefin-based elastomer include TAFMER® MH7010, MP7020, and MP0610 manufactured by Mitsui Chemicals, Inc.

Examples of the acid-modified styrene-based elastomer include a maleic anhydride-modified styrene-ethylene/butylene-styrene copolymer, a maleic anhydride-modified styrene-ethylene/propylene-styrene copolymer, a maleic anhydride-modified styrene-butadiene-styrene copolymer, and a maleic anhydride-modified styrene-isoprene-styrene copolymer, and the acid-modified styrene-based elastomer is preferably a maleic anhydride-modified styrene-ethylene/butylene-styrene copolymer. The acid-modified styrene-based elastomer here used can be any commercially available product. Examples of such any commercially available product of the maleic anhydride-modified styrene-ethylene/butylene-styrene copolymer include TUFTEC® M1943, M1913, and M1911 manufactured by Asahi Kasei Chemicals Co., Ltd., and KRATON® FG1924 manufactured by Kraton Polymers Japan Ltd.

The content of the acid-modified elastomer is preferably 0 to 70 parts by weight, more preferably 10 to 68 parts by weight, even more preferably 15 to 65 parts by weight based on 100 parts by weight of the thermoplastic resin or the thermoplastic elastomer composition. A too high content may cause the inner liner not to sufficiently obtain air pressure retainability.

The material constituting the tire inner liner can further contain an epoxy group-containing elastomer. The epoxy group-containing elastomer is contained to thereby impart the advantages of not only an enhancement in fatigue durability and an enhancement in followability of adjacent rubber in tire formation, but also an enhancement in compatibility of the thermoplastic resin with the second thermoplastic resin or thermoplastic elastomer.

The epoxy group-containing elastomer refers to an elastomer having an epoxy group.

The elastomer constituting the epoxy group-containing elastomer includes, but is not limited to, an ethylene-α-olefin copolymer, an ethylene-unsaturated carboxylic acid copolymer, and an ethylene-unsaturated carboxylate copolymer. That is, the epoxy group-containing elastomer is preferably an epoxy group-containing ethylene-α-olefin copolymer, an epoxy group-containing ethylene-unsaturated carboxylic acid copolymer, or an epoxy group-containing ethylene-unsaturated carboxylate copolymer. Examples of the ethylene-α-olefin copolymer include an ethylene-propylene copolymer, an ethylene-butene copolymer, an ethylene-hexene copolymer, and an ethylene-octene copolymer. Examples of the ethylene-unsaturated carboxylic acid copolymer include an ethylene-acrylic acid copolymer and an ethylene-methacrylic acid copolymer. Examples of the ethylene-unsaturated carboxylate copolymer include an ethylene-methyl acrylate copolymer, an ethylene-methyl methacrylate copolymer, an ethylene-ethyl acrylate copolymer, and an ethylene-ethyl methacrylate copolymer.

The epoxy group-containing elastomer can be obtained by, for example, copolymerizing an epoxy compound such as glycidyl methacrylate to an elastomer, or epoxidizing some or all unsaturated bonds of an unsaturated bond-containing elastomer by an epoxidizing agent. The content of an epoxy group in the epoxy group-containing elastomer is preferably 0.01 to 5 mol/kg, more preferably 0.1 to 1.5 mol/kg. A too low content of an epoxy group causes the elastomer to be hardly dispersed in the thermoplastic resin, and causes desired fatigue durability to be hardly obtained. A too high content of an epoxy group causes interaction with the thermoplastic resin to be strengthened to lead to an increase in melt viscosity, resulting in deterioration in processability in melt forming. The epoxy group-containing elastomer is commercially available, and any commercially available product can be used. Examples of such any commercially available product include an ethylene-glycidyl methacrylate copolymer BONDFAST® BF-2C manufactured by Sumitomo Chemical Co., Ltd., an epoxy-modified ethylene-methyl acrylate copolymer ESPRENE® EMA2752 manufactured by Sumitomo Chemical Co., Ltd., and epoxy-modified styrene-butadiene-based block copolymers EPOFRIEND® AT501 and CT310 manufactured by Daicel Corporation.

The content of the epoxy group-containing elastomer is preferably 0 to 70 parts by weight, more preferably 10 to 68 parts by weight, even more preferably 15 to 65 parts by weight based on 100 parts by weight of the thermoplastic resin or the thermoplastic elastomer composition. A too high content causes interaction with the thermoplastic resin to be strengthened to lead to an increase in melt viscosity, resulting in deterioration in processability in melt forming.

The material constituting the tire inner liner may comprise any polymer other than the thermoplastic resin or the thermoplastic elastomer composition, the second thermoplastic resin or thermoplastic elastomer, the acid-modified elastomer, and the epoxy group-containing elastomer, as well as various additives, as long as the effects of the present invention are not impaired. Examples of such an additive include a cross-linking agent, an anti-aging agent, a plasticizer, a processing aid, a cross-linking promotion aid, a cross-linking promoter, a reinforcing agent (filler), an antiscorching agent, a peptizing agent, an organic modifier, a softener, and a tackifier.

The thickness of the tire inner liner is not particularly limited as long as the tire inner liner can have its function, and is preferably 10 to 400 µm, more preferably 15 to 350 µm, even more preferably 20 to 300 µm. A too thin tire inner liner is poor in handleability and is easily wrinkled in tire production, thereby possibly causing any failure such as cracking originating from such wrinkle to occur in traveling of a finished tire. A too thick tire inner liner is poor in followability to a rubber composition adjacent in tire production, thereby causing the problem of peeling away of such an inner liner.

The tire inner liner of the present invention can be produced by molding the material into a film according to a molding method such as an inflation molding method or a T-die extrusion method.

The tire inner liner of the present invention can be used in the form of a laminate obtained by laminating a layer of a rubber composition thereon in order that adhesiveness to a rubber member constituting a tire is enhanced.

The present invention also relates to a pneumatic tire comprising the tire inner liner.

The pneumatic tire of the present invention can be produced according to an ordinary method. The pneumatic tire can be produced by, for example, placing the tire inner liner of the present invention or a laminate of the tire inner liner of the present invention and a rubber composition, on a drum for tire formation, sequentially attaching and depositing thereon members for use in usual tire production, such as a carcass layer, a belt layer, and a tread layer made of unvulcanized rubber, molding the resultant and extracting the drum to provide a green tire, and then heating and vulcanizing the green tire according to an ordinary method.

### EXAMPLES

### (1) Raw materials

Raw materials used in Examples and Comparative Examples below are as follows.

EVOH: ethylene-vinyl alcohol copolymer SoamoL® H4815B (melting point: 158°C) manufactured by Nippon Synthetic Chemical Industry Co., Ltd.

Nylon 6/66: polyamide 6/66 copolymer UBE NYLON® 5023B (melting point: 195°C) manufactured by Ube Industries, Ltd.

Modified EVOH (1): SoamoL® SG743 (aliphatic polyester-modified ethylene-vinyl alcohol copolymer, lowly modified product, melting point: 110°C) manufactured by Nippon Synthetic Chemical Industry Co., Ltd.

Modified EVOH (2): SoarnoL® SG931 (aliphatic polyester-modified ethylene-vinyl alcohol copolymer, highly modified product, melting point: 95°C) manufactured by Nippon Synthetic Chemical Industry Co., Ltd.

PBT resin: NOVADURAN® 5010R5 (polybutylene terephthalate resin, melting point: 224°C) manufactured by Mitsubishi Engineering-Plastics Corporation

PBT elastomer: PELPRENE® E450B (copolymer of polybutylene terephthalate as hard segment and polyether as soft segment, melting point: 222°C) manufactured by Toyobo Co., Ltd.

Acid-modified elastomer: TAFMER® MH7020 (maleic anhydride-modified ethylene-1-butene copolymer) manufactured by Mitsui Chemicals, Inc.

Epoxy group-containing elastomer: BONDFAST® 2C (ethylene-glycidyl methacrylate copolymer containing 6% by weight of glycidyl methacrylate) manufactured by Sumitomo Chemical Co., Ltd.

### (2) Preparation of thermoplastic resin composition or thermoplastic elastomer composition

Raw materials at each formulation shown in Table 1 were introduced into a biaxially kneading extruder manufactured by Japan Steel Works, Ltd. set to a cylinder temperature which is 20°C higher than the melting point of any material having the highest melting point among polymer components, conveyed to a kneading zone having a retention time set to about 3 to 6 minutes, and melt-kneaded, and a melt-kneaded product was extruded into a strand from a die mounted to a discharge port. The resulting strand-shaped extruded product was pelletized by a pelletizer for resins, thereby providing a pellet-shaped material.

### (3) Measurement of tan δ

The pellet-shaped material prepared according to the procedure in (2) was molded into a sheet having an average thickness of 1 mm, with a 40 mmϕ uniaxial extruder (Pla Giken Co., Ltd.) equipped with a T-die having a width of 200 mm, in extrusion conditions of cylinder and die temperatures of 10°C higher than the melting point of any material having the highest melting point among materials, a cooling roll temperature of 50°C and a pickup rate of 1 m/min.

The resulting sheet was used and cut out to a strip having a width of 5 mm and a length of 60 mm, and tan δ was measured with a viscoelasticity spectrometer manufactured by Toyo Seiki Seisaku-sho, Ltd., at a static strain of 5%, a dynamic strain of ±0.1%, and a frequency of 20 Hz in a temperature range from -80°C to 160°C.

The temperature where tan δ exhibited the maximum value was determined, and was defined as a temperature at the maximum value of tan δ. The temperature at the maximum value of tan δ is shown in Table 1. In a case where the maximum value was present in a range from 20 to 70°C, cracking resistance of a tire was confirmed.

The ratio of tan δ at -30°C to tan δ at 50°C, namely, tan δ (-30°C)/tan δ (50°C) was determined. The ratio is shown in Table 1. The effect of suppressing any peeling failure of an inner liner in a tire was observed when the ratio is less than 1.

### (4) Preparation of pressure-sensitive adhesive composition

The followings were used as raw materials of a pressure-sensitive adhesive composition.

Epoxidized SBS: epoxidized styrene-butadiene-styrene block copolymer EPOFRIEND® AT501 manufactured by Daicel Corporation

Zinc oxide: zinc oxide type III manufactured by Seido Chemical Industry Co., Ltd.

Stearic acid: beads stearic acid manufactured by NOF Corporation

Vulcanization promoter: NOCCELER® TOT-N manufactured by Ouchi Shinko Chemical Industrial Co., Ltd.

Tackifier: YS Resin D105 manufactured by Yasuhara Chemical Co., Ltd.

A pellet of each raw material shown in Table 2 was loaded into a biaxially kneading extruder TEX44 manufactured by Japan Steel Works, Ltd., and kneaded at 120°C for 3 minutes. A kneaded product was extruded into a strand continuously from the extruder, and such a strand-shaped extruded product was cooled by water and then cut by a cutter, thereby providing a pellet-shaped pressure-sensitive adhesive composition.

### (5) Production of film

The thermoplastic resin composition or the thermoplastic elastomer composition prepared in (2) and the pressure-sensitive adhesive composition prepared in (4) were extruded into a two-layered tube by use of an inflation molding apparatus manufactured by Placo Co., Ltd. at 240°C so that the thermoplastic resin composition or the thermoplastic elastomer composition was located inward and the pressure-sensitive adhesive composition was located outward, and air was blown thereinto for expansion and the resultant was folded and wound up by a pinch roll, thereby providing a tube-shaped laminate. The thickness of the thermoplastic resin composition layer or the thermoplastic elastomer composition layer was 50 µm and the thickness of the pressure-sensitive adhesive composition layer was 10 µm in the resulting laminate.

### (6) Production of tire

The film obtained according to the procedure in (5) was placed on the innermost surface of a tire to produce a green tire, and the green tire was then inserted into a mold at a temperature set to 180°C, and vulcanized according to an ordinary method, thereby producing a radial tire 195/65R15.

### (7) Tire test

### (7-1) Number of cracks (Confirmation of cracking resistance)

The tire produced in (6) was fitted to a rim of 15 × 6.0 JJ, travelled on a drum having an outer diameter of 1707 mm in conditions of an atmosphere temperature of 0°C, an air pressure 120 kPa, a load of 5 kN, and a speed of 80 km/h, repeatedly stopped and travelled with respect to each travelling for a distance of 20 km and thus travelled for 100 cycles. Thereafter, the rim was removed from the tire, the inner surface was observed, and the number of cracks in the inner liner was counted. The number of cracks was expressed by an index under the assumption that the number of cracks in Comparative Example 1 was 100. An index of not less than 100 was graded as no effect, an index of not less than 80 and less than 100 was graded as acceptable, an index of not less than 60 and less than 80 was graded as good, an index of less than 60 was graded as excellent. Acceptable, good, and excellent grades were determined as exerting the effect of reducing cracking. The evaluation results are shown in Table 1.

### (7-2) Maximum achieving temperature and area of peeling (Confirmation of effect of suppressing peeling)

The tire produced in (6) was used, an irreversible thermos-label was attached onto one portion of an inner shoulder section of the tire, and the inner liner in the same shoulder section was cut by a razor, and thereafter fitted to a rim of 15 × 6.0 JJ and travelled on a drum having an outer diameter of 1707 mm for 20000 km in conditions of an atmosphere temperature of 70°C, an air pressure 120 kPa, a load of 5 kN, and a speed of 80 km/h. After such travelling, the tire was removed from the rim, and the temperature displayed in the thermo-label was recorded as the maximum achieving temperature and also peeling of the inner liner was observed.

The maximum achieving temperature was expressed by an index under the assumption that the maximum achieving temperature in Comparative Example 1 was 100. An index of not less than 100 was graded as no effect, an index of not less than 95 and less than 100 was graded as acceptable, an index of not less than 90 and less than 95 was graded as good, an index of less than 90 was graded as excellent, and acceptable, good, and excellent grades were determined as exerting the effect of decreasing the maximum achieving temperature of the inner surface of the tire. The evaluation results are shown in Table 1.

The area of peeling of the inner liner was expressed by an index under the assumption that the area of peeling of the inner liner of Comparative Example 1 was 100. An index of not less than 100 was graded as no effect, an index of not less than 90 and less than 100 was graded as acceptable, an index of not less than 80 and less than 90 was graded as good, an index of less than 80 was graded as excellent, and acceptable, good, and excellent grades were determined as exerting the effect of suppressing peeling of the inner liner. The evaluation results are shown in Table 1.

### (7-3) Rolling resistance at low temperature

The resisting force with respect to the tire produced in (6) was measured at an atmosphere temperature of -20°C, a drum diameter of 1707 mm, a load of 2725 kgf, and a speed of 50 km/hr, and was defined as the rolling resistance at a low temperature. The resisting force at a low temperature was expressed by an index under the assumption that the rolling resistance at a low temperature in Comparative Example 1 was 100. An index of not less than 100 was graded as no effect, an index of not less than 98 and less than 100 was graded as acceptable, an index of not less than 95 and less than 98 was graded as good, an index of less than 95 was graded as excellent, and acceptable, good, and excellent grades were determined as exerting the effect of reducing rolling resistance at a low temperature. The evaluation results are shown in Table 1.

**Table 1**

| | | Comparative Example 1 | Comparative Example 2 | Comparative Example 3 | Example 1 | Example 2 | Example 3 | Example 4 | Example 5 | Example 6 | Example 7 | Example 8 |
|---|---|---|---|---|---|---|---|---|---|---|---|---|
| EVOH | parts by weight | 100 | | 80 | | | | | | | | |
| Nylon 6/66 | parts by weight | | 100 | | | | | | | | | |
| Modified EVOH (1) | parts by weight | | | | 100 | | 80 | 100 | | | | 70 |
| Modified EVOH (2) | parts by weight | | | | | 100 | | | 80 | 100 | 100 | |
| PBT resin | parts by weight | | | 20 | | | 20 | | | | | 30 |
| PBT elastomer | parts by weight | 10 | | | 10 | 10 | | 40 | 20 | 30 | 20 | |
| Acid-modified elastomer | parts by weight | 50 | 50 | | 50 | 50 | 50 | 70 | 70 | 100 | 140 | |
| Epoxy group-containing elastomer | parts by weight | | | 50 | | | | | | | | 60 |
| Temperature at maximum value of tan δ | °C | 80 | 95 | 85 | 55 | 40 | 60 | 55 | 40 | 35 | 40 | 65 |
| Tan δ (-30°C)/tan δ (50°C) | | 1.4 | 3.8 | 2.2 | 0.7 | 0.6 | 0.5 | 0.4 | 0.4 | 0.3 | 0.3 | 0.2 |
| Number of cracks | | 100 | 100 | 105 | 70 | 60 | 75 | 55 | 60 | 40 | 75 | 85 |
| Maximum achieving temperature | | 100 | 140 | 125 | 89 | 80 | 84 | 76 | 82 | 78 | 83 | 92 |
| Area of peeling | | 100 | 130 | 120 | 65 | 45 | 55 | 30 | 50 | 35 | 65 | 75 |
| Rolling resistance at low temperature | | 100 | 110 | 102 | 98 | 97 | 98 | 95 | 95 | 94 | 93 | 97 |

**Table 2 Compounding of pressure-sensitive adhesive composition**

| | |
|---|---|
| Epoxidized SBS | 100 parts by weight |
| Zinc oxide | 5 parts by weight |
| Stearic acid | 1 part by weight |
| Vulcanization promoter | 3 parts by weight |
| Tackifier | 30 parts by weight |
| Total | 139 parts by weight |

### INDUSTRIAL APPLICABILITY

The tire inner liner of the present invention can be suitably utilized in production of a pneumatic tire.

## Claims

1. A tire inner liner comprising a material comprising a thermoplastic resin or a thermoplastic elastomer composition containing a thermoplastic resin component and an elastomer component, wherein a maximum value of tan δ is present at 20 to 70°C in the temperature-dependent curve of tan δ of the material.

2. The tire inner liner according to claim 1, wherein the ratio of tan δ at -30°C to tan δ at 50°C of the material is less than 1.

3. The tire inner liner according to claim 1 or 2, wherein the thermoplastic resin or the thermoplastic resin component is a modified ethylene-vinyl alcohol copolymer.

4. The tire inner liner according to claim 3, wherein the modified ethylene-vinyl alcohol copolymer is a polyester-modified ethylene-vinyl alcohol copolymer.

5. The tire inner liner according to any one of claims 1 to 4, wherein the thermoplastic elastomer composition has a continuous phase and a dispersion phase, the thermoplastic resin component forms a continuous phase, and the elastomer component forms a dispersion phase.

6. The tire inner liner according to any one of claims 1 to 5, wherein the material further comprises a second thermoplastic resin or thermoplastic elastomer having a melting point of 170°C or more.

7. The tire inner liner according to claim 6, wherein the second thermoplastic resin or thermoplastic elastomer is a polyester resin or a polyester elastomer.

8. A pneumatic tire comprising the tire inner liner according to any one of claims 1 to 7.
